# EUROPEAN PATENT SPECIFICATION

(11) **EP 2 851 281 B1**
(45) Date of publication and mention of the grant of the patent: **06.04.2016**
(21) Application number: 13185220.4
(22) Date of filing: 19.09.2013
(51) Int. Cl.: B64C 1/14

(54) **System and method for interactive visualization of information in an aircraft cabin**
System und Verfahren zur interaktiven Visualisierung von Informationen in einer Flugzeugkabine
Système et procédé de visualisation interactive d'informations dans une cabine d'aéronef

(43) Date of publication of application: 25.03.2015
(73) Proprietor: Airbus Operations GmbH, 21129 Hamburg (DE)
(72) Inventor: Coto-Lopez, Gerald, 22765 Hamburg (DE); Knefelkamp, Sven, 22880 Wedel (DE); Hertel, Johannes, 22765 Hamburg (DE)
(74) Representative: Maiwald Patentanwalts GmbH

(56) References cited:
- FR-A1- 2 961 592
- US-A1- 2008 021 636
- US-A1- 2008 042 012

## Description

### FIELD OF THE INVENTION

The present invention relates to a system and a method for interactive visualization of information in an aircraft cabin. Furthermore, the invention relates to a computer program product adapted for controlling such method and a computer readable medium comprising such computer program product stored thereon.

### TECHNICAL BACKGROUND

In modem passenger aircraft, entertainment systems are provided for entertaining and informing passengers during long flights. For example, large displays are arranged on top of several passenger seats in order to show entertainment programs to a plurality of passengers. Alternatively, each passenger may be provided with his own display arranged for example on a rear side of each passenger seat. On such displays, it is common to provide current information about the flight such as flight position, distance to the airport, flight height, outside temperature, etc. Furthermore, other visual contents such as entertaining movies, advertisements or information from the flight crew to the passenger may be displayed. As an alternative to providing separate displays in front or on top of passenger seats, it has been proposed to include an information and entertaining system with displays for example in cabin windows of an aircraft. Such approach is described for example in DE10 2006 007 284 A1 and US2010 005 495 A1 and US2008/0021636.

### SUMMARY OF THE INVENTION

There may be a need for a novel approach for visualizing information to a passenger in an aircraft cabin, such approach enabling easy and intuitive demanding of interesting information by an aircraft passenger.

Such need may be met by the subject matter of the independent claims. Advantageous embodiments are defined in the dependent claims and described in the description. According to a first aspect of the present invention, an interactive aircraft cabin window display system is proposed to comprise a display assembly, a passenger monitoring assembly, an environment monitoring assembly and an information visualisation assembly. The display assembly may be integrated into an aircraft cabin window. Furthermore, the display assembly is adapted for displaying variable images on a screen integrated in the aircraft cabin window. The passenger monitoring assembly is adapted for detecting a direction into which a passenger is looking or pointing through the aircraft cabin window. The environment monitoring assembly is adapted for acquiring a representation of an environment outside the aircraft cabin window. The information visualization assembly is adapted for visualizing information on the screen of the display assembly at specific locations wherein these locations are specifically selected by taking into account the representation acquired by the environment monitoring assembly and taking into account the direction detected by the passenger monitoring assembly.

According to a second aspect of the present invention, a method for interactive visualization of information in an aircraft is provided. The method comprises the steps of detecting a direction in which a passenger is looking or pointing through an aircraft cabin window using a passenger monitoring assembly, acquiring a representation of an environment outside the aircraft cabin window using an environment monitoring assembly and visualizing information on a screen integrated into the aircraft cabin window at specific locations selected by taking into account the representation acquired by the environment monitoring assembly and taking into account the direction detected by the passenger monitoring assembly.

Further aspects of the invention are directed to a computer program product comprising computer readable instructions for instructing a computer for performing the above mentioned method and a computer readable medium comprising such computer program product stored thereon.

Without restricting a scope of the invention, an inventive concept of the above mentioned aspects may be seen as being based on the following ideas and observations:
Conventional in-flight entertainment (IFE) systems mainly serve for entertaining passengers during flights by displaying movies, playing music or enabling playing computer games. A main purpose of all these entertainment options is to distract the passenger from the actual flight. At most, some basic information concerning the flight are provided, mainly in the form of numbers concerning data such as flight distance, flight height, outside temperature etc.

However, while in early flight travelling, passengers were fascinated by the fact that they are travelling through the air and may see the earth through the cabin windows in a bird's perspective, today's passengers are mainly distracted from such actual flight experience and, instead, are invited by the IFE to enjoy entertainment which is typically not related to any flight experience.

Aspects and embodiments of the present invention aim at enabling provision of information to a flight passenger in a specific manner such as to improve the passenger's flight experience.

For this purpose, an interactive display system is provided wherein a display assembly may be integrated into an aircraft cabin window, i.e. at a position where the passenger is used to look outside the aircraft in order to observe an environment. The display assembly may be adapted such that various image contents may be displayed within the aircraft cabin window.

Furthermore, the interactive display system comprises a passenger monitoring assembly and an environment monitoring assembly. The passenger monitoring assembly may detect a direction into which a passenger is currently looking through the aircraft cabin window. Alternatively, the passenger monitoring assembly may detect a direction into which a passenger is currently pointing through the aircraft cabin window using for example one of his fingers. The environment monitoring assembly may acquire a visual representation such as an image or a video stream of an environment outside the aircraft cabin window.

An information visualization assembly comprised in the interactive display system may then analyse data provided by the passenger monitoring assembly and by the environment monitoring assembly in order to detect for example an object comprised in the aircraft's environment to which object the passenger is currently looking or pointing and to then e.g. provide information about this object.

Accordingly, a passenger may demand information about things or objects he sees through the aircraft cabin window in a very easy and intuitive interactive manner. Thereby, the passenger's flight experience may be significantly improved.

According to an embodiment of the invention, the passenger monitoring assembly may be adapted for tracking a direction into which eyes of the passenger are directed.

In other words, using the passenger monitoring assembly, the interactive display system may analyze into which direction a passenger is currently looking through the aircraft window. Based on such information, the interactive display system may determine which object the passenger is currently observing through the cabin window and may then provide for example additional information about this object. Such eye-tracking enables very intuitive information provision to the passenger.

In this context, the term "direction" may include one or preferably both of an orientation into which the passenger's eyes are currently looking and a position of the passenger's head and specifically the passenger's eyes with respect to the aircraft cabin window through which he is currently looking.

According to an embodiment of the invention, the screen of the display assembly comprises a pressure sensitive matrix layer providing 2D information about a location pressed by a passenger and the passenger monitoring assembly is connected to the screen for receiving information from the pressure sensitive matrix layer.

In other words, the display assembly may be provided with a touch screen which may provide data signals indicating where a passenger has actually touched the screen, i.e. presses a position on the screen for example with one of his fingers. Using such touch screen, a passenger may point onto a location within the aircraft cabin window at which he sees a specific object of interest and may thus intuitively demand further information about this object.

According to an embodiment of the invention, the screen comprised in the display assembly may be adapted such as to enable switching to a transparent mode.

In other words, such screen may be implemented, on the one hand, such as to visualize information within the aircraft cabin window and, on the other hand, such as to provide at least a certain degree of transparency such that the passenger may still look through the aircraft cabin window and see the environment of the aircraft. For example, such screen may be provided using an LCD (liquid crystal display) having at least partially transparent electrodes and front and rear covers. Alternatively, semi-transparent OLED (organic light emitting diode) displays may be integrated into cabin windows.

According to an embodiment, the environment monitoring assembly may comprise at least one camera. Such camera may be attached to the aircraft and may be installed such as to be directed towards an outside environment of the aircraft. Preferably, two cameras are provided wherein each of the cameras may monitor one lateral side of the aircraft. The camera may be adapted to acquire e.g. two-dimensional images or image sequences giving a representation of the environment outside the aircraft cabin window. Such images may be acquired at certain time intervals. For example, several images may be acquired per second, similarly to acquiring a movie. For example, the camera may include a photo detector such as a CCD (charge coupled device).

According to an embodiment of the invention, the proposed interactive aircraft cabin window display system may further comprise an output assembly adapted for outputting information to an external passenger end device (PED), such outputted information being provided by the information visualization assembly.

In other words, the output assembly may enable transmitting information from the information visualization assembly to an external passenger end device. Such passenger end device may be for example a mobile phone, a tablet computer, a laptop, etc. having preferably an own display and integrated memory for storing information, specifically visually displayable information.

Accordingly, using the display system's output assembly, a passenger may easily demand information about an object of interest outside the aircraft window and may then output such information to his own PED. Additionally, for example further information such as an image provided by a camera included in the environment monitoring assembly may be transmitted to the PED thereby enabling for example an easy way of taking pictures of an aircraft's environment using the passenger's end device.

The output assembly may be adapted for outputting information via wireless data transmission. Such wireless data transmission may be implemented using e.g. WiFi, bluetooth or other near-field-communication (NFC). Such wireless data transmission further improves easy and intuitive use of the proposed interactive display system.

According to a further embodiment, the display system is further adapted for receiving and displaying data from an in-flight entertainment system.

On the one hand, in such embodiment, the display assembly of the interactive display system may be used as an additional display in the aircraft cabin to be easily observed for example by a passenger sitting on a window seat and conventional information contents such as movies may be displayed.

On the other hand, additionally to such conventional displaying option, interactive displaying options may be enabled using for example the passenger monitoring assembly for detecting a position at which a passenger is currently looking or pointing on a screen of the display assembly. Using such option for easy and intuitive interactivity, a passenger may for example control the in-flight entertainment system and may e.g. select information contents provided by such IFE system or such option for interactivity may be used in playing computer games provided by the IFE system.

The proposed interactive aircraft cabin window display system may be installed in an aircraft.

Such aircraft may comprise for example a plurality of display assemblies each being integrated into one of a plurality of aircraft cabin windows. The aircraft may further comprise a plurality of passenger monitoring assemblies each being installed in an aircraft cabin such as to monitor actions of a passenger sitting next to one of the plurality of aircraft cabin windows. Finally, the aircraft may comprise at least two environment monitoring assemblies, wherein each one of these environment monitoring assemblies is installed such as to acquire a representation of an environment of the aircraft at one of both sides of the aircraft.

It is noted that possible features and advantages of embodiments of the present invention are described herein with respect to an inventive interactive aircraft cabin window display system, an aircraft comprising such system, a method for interactive visualization of information in an aircraft, a computer program product or a computer readable medium. One skilled in the art will understand that the features may be suitably combined or replaced or transferred to other embodiments in an analogue manner thereby creating further embodiments of the present invention.

### BRIEF DESCRIPTION OF THE DRAWINGS

Subsequently, embodiments of the present invention will be described with reference to the enclosed drawings wherein neither the description nor the drawings shall be interpreted as limiting the invention.
Figure 1 shows an interactive aircraft cabin window display system according to an embodiment of the present invention.
Figure 2 shows an aircraft comprising an interactive aircraft cabin window display system according to an embodiment of the present invention.
Figure 3 shows a display assembly and an output assembly of an interactive aircraft cabin window display system according to another embodiment of the present invention.

The figures are only schematical and not to scale. Throughout the figures, same reference signs refer to same or similar features.

### DETAILED DESCRIPTION OF PREFERED EMBODIMENTS

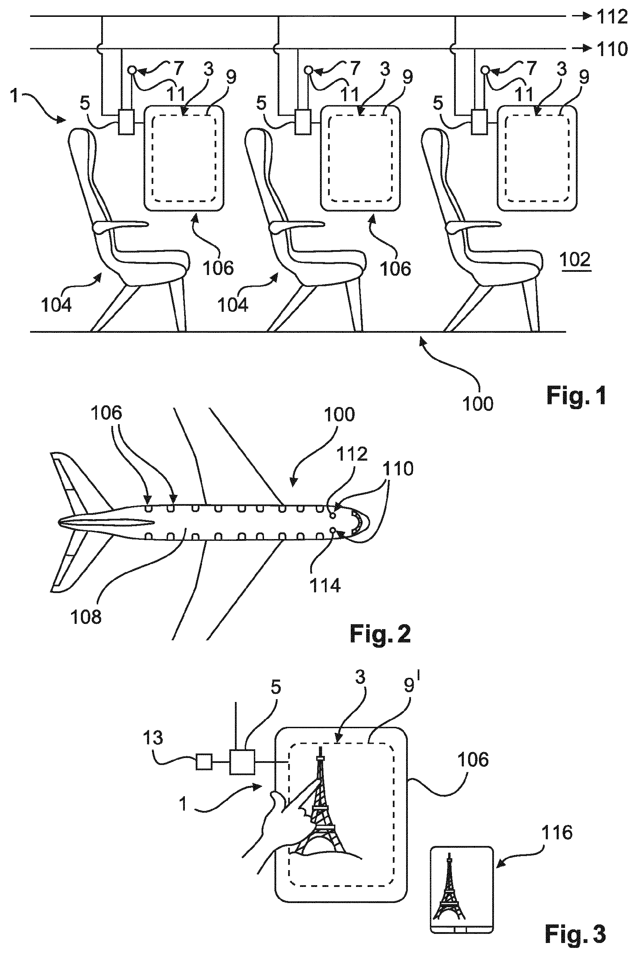

Figure 1 shows a portion of a cabin 102 in an interior of an aircraft 100. Figure 2 shows a top view onto the aircraft 100.

In the cabin 102, several rows of seats 104 are arranged one behind the other. Each seat 104 is arranged next to an aircraft cabin window 106 provided in a fuselage 108 of the aircraft 100.

In the aircraft cabin 102 an interactive aircraft cabin window display system 1 according to an embodiment of the present invention is provided. The display system 1 comprises a plurality of display assemblies 3. Each display assembly 3 is arranged in one of the cabin windows 106. Each display assembly 3 is connected to and controlled by an information visualization assembly 5. Each information visualization assembly 5 is connected to a passenger monitoring assembly 7 positioned in the interior of the cabin 102 and to one of two environment monitoring assemblies 110 arranged at an outside of the fuselage 108 of the aircraft 100.

The display assemblies 3 comprise a screen 9 integrated into the aircraft cabin window 106. The screen 9 typically comprises a multiplicity of pixels arranged in a two-dimensional matrix wherein each of the pixels may be controlled to provide a certain degree of transparency and / or colour. By suitably controlling the multiplicity of pixels, variable images may be displayed by the display assembly 3. Accordingly, the display assembly 3 integrated into the cabin windows 106 will enable a visualization of digital pictures in the cabin windows 106. For areas of the display assembly not showing any portion of a picture, the cabin window 106 including the display assembly shall be transparent as is normally the case. Accordingly, the screen 9 of the display assembly 3 shall be provided as a semi-transparent screen such that displayed pictures may have adjustable levels of transparency and brightness. For example, head-up display projection technology, new semi-transparent LCD display technology or other technologies may be used for implementing the display assembly 3.

Each of the display assemblies 3 may be controlled by an associated information visualization assembly 5 to display various types of information or entertainment. For example, each information visualization assembly 5 may be connected to two different data streams of a cabin distribution network 112 of an in-flight entertainment system or any other available data bus. The two data streams may reflect a left-hand and right-hand row of cabin windows 106 on the aircraft cabin 102, respectively. A connected IFE server may generate at least two separate data streams, i.e. one for each side of the aircraft. Images generated in the servers may make use of aircraft information generated for example by aircraft avionic systems and from information available from ground-based servers. More streams may be generated depending on a number of different views to be simultaneously displayed.

In order to provide for an intuitive interactivity for the display system 1, each portion of the display system 1 adjacent to one of the seats 104 and one of the cabin windows 106 is provided with a passenger monitoring assembly 7. The passenger monitoring assembly 7 is adapted for detecting a direction in which a passenger sitting for example on the window seat 104 is looking through the aircraft cabin window 106 or pointing through the aircraft cabin window 106.

In the embodiment shown in figure 1, the passenger monitoring assembly 7 is provided as an eye-tracking system adapted for tracking a direction into which eyes of a passenger are directed. For such purpose, a small camera 11 is provided within the aircraft cabin 102 at a location close to an upper part of the window seat 104 such that its optics is directed to a region which typically coincides with a head of a passenger sitting on the window seat 104. Using such camera 11 together with a suitable control algorithm, the passenger monitoring assembly 7 may detect the eyes of the passenger and their orientation and from such information, the passenger monitoring assembly 7 may derive a direction into which the passenger is currently looking. Such information from the eye-tracking passenger monitoring assembly 7 may then be transmitted to the information visualization assembly 5.

Furthermore, the information visualization assembly 5 is connected to an environment monitoring assembly 110. This environment monitoring assembly 110 may comprise two cameras 112, 114 arranged at an outer skin of the fuselage 108 of the aircraft 100. Each camera 112, 114 may acquire an image representing an environment at one of both sides of the aircraft 100. Such image information may then be transmitted to each of the information visualization assemblies 5.

Based on the information of both the passenger monitoring assembly 7 and the environment monitoring assembly 110, the information visualization assembly 5 may control the display assembly 3 such as to visualize suitable information on the screen 9 at specific locations. Therein, the information visualization assembly 5 may for example first analyse a direction into which the passenger is currently looking through the window 106 and may then determine using the representation information acquired from the environment monitoring assembly 112 to which object outside the aircraft 100 the passenger is probably currently looking. Having identified such object, the information visualization assembly may acquire further information about this object for example from the IFE server. Finally, such additional information may then be displayed on the screen 9 at a suitable position such that the passenger is provided with such additional information about the object he is currently observing in an intuitive manner. For example, the information may be displayed at a position in close proximity to a location where the passenger sees the interesting object through the cabin window. Additionally, arrows may point to or lines may connect the information with such location.

In an alternative embodiment as shown in figure 3, the display assembly 3 is provided with a touch-screen 9'. Such touch-screen 9' comprises a pressure sensitive matrix layer providing two-dimensional information on a location touched or pressed by a passenger. For example, such two-dimensional information may be acquired using information about an electrical capacity of the matrix layer wherein such capacity changes in dependence of a location pressed or touched by the passenger. Accordingly, the passenger monitoring assembly 3 connected to such touch-screen may receive information from the pressure sensitive matrix layer comprised therein and from such information, the passenger monitoring assembly may derive a direction into which the passenger is currently pointing through the aircraft cabin window 106.

Furthermore, as shown in figure 3, the interactive aircraft cabin window display system 1 may comprise an output assembly 13 such as a WiFi transmitter, a Bluetooth transmitter or an NFC transmitter. This output assembly 13 is connected to the information visualization assembly 5 and may wirelessly transmit data acquired by this information visualization assembly 5 for example to an external passenger end device 116. Such passenger end device may be for example a passenger's mobile phone, notepad or notebook.

Accordingly, using the proposed interactive aircraft cabin window display system 1, the passenger may for example observe an object of interest with his eyes or point at this object of interest with his finger onto the touch-screen 9' of the passenger monitoring assembly 3. Then, using the information provided by the passenger monitoring assembly 3 together with the information provided by the environment monitoring assembly 110, the information visualization assembly 5 may not only show information about the object of interest on the screen 9' but may also transmit an image of the outside environment including the object of interest together with additional information about this object of interest to the passenger end device 116.

Finally, some ideas for using the proposed interactive aircraft cabin window display system in an aircraft will be presented.

For example, the proposed display system 1 may visualize a ground portion and a sky portion separated by an artificial horizon.

In another example, aircraft performance parameters such as altitude, speed, direction, wind speed, etc. may be displayed.

As a further alternative, a moving map display may be overlaid on the ground portion of an image representation provided by the environment monitoring assembly. Additionally, points of interest may be displayed by overlaying specific markers onto the ground portion of the representation image of the environment.

In all such various types of displayed features, the interactive display system 1 may use its passenger monitoring assembly 7 in order to detect which objects are of particular interest for the passenger and may then provide additional information about these objects of interest.

For example, if an aircraft flies over Paris and a passenger observes the Eiffel tower longer than for example a specific time period or points with his finger to the Eiffel tower, the information visualization assembly recognizes that the passenger is specifically interested in this city or specifically in this monument and may provide additional information about the city such as its population, weather, temperature, sites to be seen, etc. or specific information about the Eiffel tower such as its height, age, architect, etc.

With respect to a sky portion of an environment representation image displayed in the display assembly, the interactive display system may recognize when a passenger is observing or pointing to a neighbouring aircraft and may provide for example further information such as a flight number, start time, destination, altitude, speed, etc.

At night time, an overlay of star constellations and planets or even visible satellites may be displayed by the display assembly and upon detecting specific interest of the passenger, names of stars, planets or constellations and further information about these objects may be displayed.

As a further application, fixed or moving images may be displayed on the display assembly as a type of "screen saver" for example for passenger marketing of entertainment. For example, airline logos or moving fish in an aquarium may be displayed.

Furthermore, in order to darken the cabin window 106 to a certain degree, the display assembly 3 and its screen 9 may be controlled to display a complete dark static image in order to thereby provide a level of window shading.

All views and visualizations generated by the proposed interactive display system 1 may be customizable by an airline or may be selected by an automatic flight script, a cabin purser via an IFE control panel or by a passenger via the IFE system.

Summarizing, embodiments of the proposed interactive aircraft cabin window display system 1 may allow for improved intuitive information provision to an aircraft passenger and may thereby improve the passenger's flight experience.

Finally, it shall be noted that terms such as "comprising", "including" or similar do not exclude further elements or steps and that the article "a" or "an" does not exclude the presence of a plurality of objects. Reference signs in the claims shall not restrict the scope of the invention.

### LIST OF REFERENCE SIGNS:

- 1: interactive aircraft cabin window display system
- 3: display assembly
- 5: information visualization assembly
- 7: passenger monitoring assembly
- 9: screen
- 9': touch-screen
- 11: camera
- 13: output assembly
- 100: aircraft
- 102: aircraft cabin
- 104: seat
- 106: aircraft cabin window
- 108: aircraft fuselage
- 110: environment monitoring assembly
- 112: camera
- 114: camera
- 116: passenger end device

## Claims

1. Interactive aircraft cabin window display system, comprising (1):
a display assembly (3) integratable into an aircraft cabin window (106);
a passenger monitoring assembly (7);
an environment monitoring assembly (110); and
an information visualization assembly (5);
wherein the display assembly (3) is adapted for displaying variable images on a screen (9) integrated in the aircraft cabin window (106);
wherein the environment monitoring assembly (110) is adapted for acquiring a representation of an environment outside the aircraft cabin window (106); and
wherein the information visualization assembly (5) is adapted for visualizing information on the screen (9) at specific locations selected by taking into account the representation acquired by the environment monitoring assembly (110) and
**characterized in that**:
the passenger monitoring assembly (7) is adapted for detecting a direction in which a passenger is one of looking and pointing through the aircraft cabin window (106) and the information visualization assembly takes into account the direction detected by the passenger monitoring assembly (7).

2. System according to claim 1, wherein the information visualization assembly (5) is adapted for visualizing information on the screen with respect to objects to which the passenger is one of looking and pointing, respectively.

3. System according to claim 1 or 2, wherein the passenger monitoring assembly (7) is adapted for tracking a direction into which eyes of the passenger are directed.

4. System according to one of claims 1 to 3, wherein the screen (9) comprises a pressure sensitive matrix layer providing 2D information on a location pressed by the passenger and wherein the passenger monitoring assembly (7) is connected to the screen (9) for receiving information from the pressure sensitive matrix layer.

5. System according to one of claims 1 to 4, wherein the screen (9) may be switched to a transparent mode.

6. System according to one of claims 1 to 5, wherein the environment monitoring assembly (110) comprises at least one camera (112, 114).

7. System according to one of claims 1 to 6, further comprising an output assembly (13) adapted for outputting information provided by the information visualization assembly (5) to an external passenger end device (116).

8. System according to claim 7, wherein the output assembly (116) is adapted for outputting information via at least one of WiFi, Bluetooth and Near-Field-Communication.

9. System according to one of claims 1 to 8, wherein the system (1) is further adapted for receiving and displaying data from an in-flight entertainment system (112).

10. Aircraft (100) comprising an interactive aircraft cabin window display system (1) according to one of claims 1 to 9.

11. Aircraft (100) according to claim 10, comprising
a plurality of display assemblies (3) each being integrated into one of a plurality of aircraft cabin windows (106);
a plurality of passenger monitoring assemblies (7) each being installed in an aircraft cabin (102) such as to monitor actions of a passenger sitting next to one of the plurality of aircraft cabin windows (106);
two environment monitoring assemblies (112, 114), each one environment monitoring assembly (112, 114) being installed such as to acquire a representation of an environment at one of both sides of the aircraft (100).

12. Method for interactive visualization of information in an aircraft cabin (102), the method comprising the steps of:
detecting a direction in which a passenger is one of looking and pointing through an aircraft cabin window (106) using a passenger monitoring assembly (7);
acquiring a representation of an environment outside the aircraft cabin window (106) using an environment monitoring assembly (112, 114); and
visualizing information on a screen (9) integrated into the aircraft cabin window (106) at specific locations selected by taking into account the representation acquired by the environment monitoring assembly (112, 114) and taking into account the direction detected by the passenger monitoring assembly (7).

13. Computer program product comprising computer readable instructions instructing a computer for performing the method according to claim 12.

14. Computer readable medium comprising a computer program product according to claim 13 stored thereon.

## Patentansprüche

1. Interaktives Luftfahrzeugkabinenfenster-Anzeigesystem, aufweisend (1):
eine in ein Luftfahrzeugkabinenfenster (106) integrierbare Anzeigeanordnung (3);
eine Passagier-Überwachungsanordnung (7);
eine Umgebungsüberwachungsanordnung (110); und
eine Informationsvisualisierungsanordnung (5);
wobei die Anzeigeanordnung (3) zum Anzeigen von variablen Bildern auf einem in das Luftfahrzeugkabinenfenster (106) integrierten Bildschirm (9) ausgeführt ist;
wobei die Umgebungsüberwachungsanordnung (110) zum Erfassen einer Darstellung einer Umgebung außerhalb des Luftfahrzeugkabinenfensters (106) ausgeführt ist; und wobei die Informationsvisualisierungsanordnung (5) zum Visualisieren von Informationen auf dem Bildschirm (9) an spezifischen Stellen ausgeführt ist, welche unter Berücksichtigung der durch die Umgebungsüberwachungsanordnung (110) erfassten Darstellung ausgewählt sind und **dadurch gekennzeichnet, dass**:
die Passagier-Überwachungsanordnung (7) zum Erfassen einer Richtung ausgeführt ist, in welche ein Passagier durch das Luftfahrzeugkabinenfenster (106) entweder hindurchsieht oder zeigt und die Informationsvisualisierungsanordnung die durch die Passagier-Überwachungsanordnung (7) erfasste Richtung berücksichtigt.

2. System nach Anspruch 1, wobei die Informationsvisualisierungsanordnung (5) zum Visualisieren von Informationen auf dem Bildschirm in Bezug auf Objekte ausgeführt ist, auf die der Fahrgast entweder sieht oder zeigt.

3. System nach Anspruch 1 oder 2, wobei die Passagier-Überwachungsanordnung (7) zum Verfolgen einer Richtung ausgeführt ist, in welche die Augen des Passagiers gerichtet sind.

4. System nach einem der Ansprüche 1 bis 3, wobei der Bildschirm (9) eine druckempfindliche Matrixschicht aufweist, welche 2D-Informationen an einer durch den Passagier betätigten Stelle bereitstellt und wobei die Passagier-Überwachungsanordnung (7) zum Empfangen von Informationen von der druckempfindlichen Matrixschicht mit dem Bildschirm (9) verbunden ist.

5. System nach einem der Ansprüche 1 bis 4, wobei der Bildschirm (9) auf einen transparenten Modus umgeschaltet werden kann.

6. System nach einem der Ansprüche 1 bis 5, wobei die Umgebungsüberwachungsanordnung (110) zumindest eine Kamera (112, 114) aufweist.

7. System nach einem der Ansprüche 1 bis 6, ferner aufweisend eine Ausgabeanordnung (13) zum Ausgeben von Informationen, die von der Informationsvisualisierungsanordnung (5) für ein externes Passagier-Endgerät (116) bereitgestellt sind.

8. System nach Anspruch 7, wobei die Ausgabeanordnung (116) zum Ausgeben von Informationen zumindest über WiFi oder Bluetooth oder Nahfeld-Kommunikation ausgeführt ist.

9. System nach einem der Ansprüche 1 bis 8, wobei das System (1) ferner zum Empfangen und Anzeigen von Daten von einem Flug-Unterhaltungssystem (112) ausgeführt ist.

10. Luftfahrzeug (100), das ein interaktives Luftfahrzeugkabinenfenster-Anzeigesystem (1) nach einem der Ansprüche 1 bis 9 aufweist.

11. Luftfahrzeug (100) nach Anspruch 10, aufweisend
eine Vielzahl von Anzeigeanordnungen (3), welche jeweils in eines aus einer Vielzahl von Luftfahrzeugkabinenfenstern (106) integriert ist;
eine Vielzahl von Passagier-Überwachungsanordnungen (7), welche jeweils in einer Luftfahrzeugkabine (102) installiert sind, um Aktionen eines neben einem der Vielzahl von Luftfahrzeugkabinenfenstern (106) sitzenden Passagiers zu überwachen; zwei Umgebungsüberwachungsanordnungen (112, 114), die jeweils derart installiert sind, um eine Darstellung einer Umgebung an einer der beiden Seiten des Luftfahrzeugs (100) zu erfassen.

12. Verfahren zum interaktiven Visualisieren von Informationen in einer Luftfahrzeugkabine (102), das Verfahren aufweisend die Schritte:
Erfassen einer Richtung, in welche ein Passagier durch ein Luftfahrzeugkabinenfenster (106) entweder hindurchsieht oder zeigt, mittels einer Passagier-Überwachungsanordnung (7);
Erfassen einer Darstellung einer Umgebung außerhalb des Luftfahrzeugkabinenfensters (106) mittels einer Umgebungsüberwachungsanordnung (112, 114); und
Visualisieren von Informationen auf einem in das Luftfahrzeugkabinenfenster (106) integrierten Bildschirm (9) an spezifischen Stellen, welche unter Berücksichtigung der durch die Umgebungsüberwachungsanordnung (112, 114) erfassten Darstellung ausgewählt sind und die von der Passagier-Überwachungsanordnung (7) erfasste Richtung berücksichtigen.

13. Computerprogrammprodukt, welches computerlesbare Anweisungen aufweist, welche einen Computer zum Ausführen des Verfahrens nach Anspruch 12 anweisen.

14. Computerlesbares Medium, aufweisend ein darauf gespeichertes Computerprogrammprodukt nach Anspruch 13.

## Revendications

1. Système d'affichage de hublot de cabine d'aéronef interactif, comprenant (1) :
un ensemble d'affichage (3) intégrable dans un hublot de cabine d'aéronef (106) ;
un ensemble de surveillance de passager (7) ;
un ensemble de surveillance de l'environnement (110) ; et
un ensemble de visualisation d'informations (5) ;
dans lequel l'ensemble d'affichage (3) est adapté pour afficher des images variables sur un écran (9) intégré dans le hublot de cabine d'aéronef (106) ;
dans lequel l'ensemble de surveillance de l'environnement (110) est adapté pour acquérir une représentation d'un environnement à l'extérieur du hublot de cabine d'aéronef (106) ; et dans lequel l'ensemble de visualisation d'informations (5) est adapté pour visualiser des informations sur l'écran (9) à des emplacements spécifiques sélectionnés en tenant compte de la représentation acquise par l'ensemble de surveillance de l'environnement (110) et **caractérisé en ce que** :
l'ensemble de surveillance de passager (7) est adapté pour détecter une direction dans laquelle un passager regarde ou une direction qu'un passager montre du doigt à travers le hublot de cabine d'aéronef (106) et l'ensemble de visualisation d'informations tient compte de la direction détectée par l'ensemble de surveillance de passager (7).

2. Système selon la revendication 1, dans lequel l'ensemble de visualisation d'informations (5) est adapté pour visualiser des informations sur l'écran relativement à des objets que le passager regarde ou montre du doigt, respectivement.

3. Système selon la revendication 1 ou 2, dans lequel l'ensemble de surveillance de passager (7) est adapté pour suivre une direction dans laquelle les yeux du passager sont orientés.

4. Système selon l'une quelconque des revendications 1 à 3, dans lequel l'écran (9) comprend une couche de matrice sensible à la pression fournissant des informations en 2D sur un emplacement touché du doigt par le passager et dans lequel l'ensemble de surveillance de passager (7) est relié à l'écran (9) pour recevoir des informations de la couche de matrice sensible à la pression.

5. Système selon l'une quelconque des revendications 1 à 4, dans lequel l'écran (9) peut être commuté sur un mode transparent.

6. Système selon l'une quelconque des revendications 1 à 5, dans lequel l'ensemble de surveillance de l'environnement (110) comprend au moins une caméra (112, 114).

7. Système selon l'une quelconque des revendications 1 à 6, comprenant en outre un ensemble de transmission (13) adapté transmettre des informations fournies par l'ensemble de visualisation d'informations (5) à un dispositif d'extrémité de passager extérieur (116).

8. Système selon la revendication 7, dans lequel l'ensemble de transmission (13) est adapté pour transmettre des informations par l'intermédiaire d'au moins l'une d'une communication WiFi, Bluetooth et en champ proche.

9. Système selon l'une quelconque des revendications 1 à 8, dans lequel le système (1) est en outre adapté pour recevoir et afficher des données provenant d'un système de divertissement en vol (112).

10. Aéronef (100) comprenant un système d'affichage de hublot de cabine d'aéronef interactif (1) selon l'une quelconque des revendications 1 à 9.

11. Aéronef (100) selon la revendication 10, comprenant :
une pluralité d'ensembles d'affichage (3), chacun étant intégré dans l'un d'une pluralité de hublots de cabine d'aéronef (106) ;
une pluralité d'ensembles de surveillance de passager (7) chacun étant installé dans une cabine d'aéronef (102) de manière à surveiller les actions d'un passager assis à côté d'un de la pluralité de hublots de cabine d'aéronef (106) ;
deux ensembles de surveillance de l'environnement (112, 114), chaque ensemble de surveillance de l'environnement (112, 114) étant installé de manière à acquérir une représentation d'un environnement au niveau de l'un des deux côtés de l'aéronef (100).

12. Procédé de visualisation interactive d'informations dans une cabine d'aéronef (102), le procédé comprenant les étapes consistant à :
détecter une direction dans laquelle un passager regarde ou une direction qu'un passager montre du doigt à travers un hublot de cabine d'aéronef (106) en utilisant un ensemble de surveillance de passager (7) ;
acquérir une représentation d'un environnement à l'extérieur du hublot de cabine d'aéronef (106) en utilisant un ensemble de surveillance de l'environnement (112, 114) ; et
visualiser des informations sur un écran (9) intégré dans le hublot de cabine d'aéronef (106) à des emplacements spécifiques sélectionnés en tenant compte de la représentation acquise par l'ensemble de surveillance de l'environnement (112, 114) et en tenant compte de la direction détectée par l'ensemble de surveillance de passager (7).

13. Produit de programme d'ordinateur comprenant des instructions lisibles par ordinateur donnant l'ordre à un ordinateur d'exécuter le procédé selon la revendication 12.

14. Support lisible par ordinateur comprenant un produit de programme d'ordinateur selon la revendication 13 stocké sur celui-ci.
